# EUROPÄISCHE PATENTSCHRIFT

(11) **EP 0 764 567 B1**
(45) Veröffentlichungstag und Bekanntmachung des Hinweises auf die Patenterteilung: **06.06.2001**
(21) Anmeldenummer: 96112575.4
(22) Anmeldetag: 03.08.1996
(51) Int. Cl.: B60S 1/02, B60S 1/08, B60R 16/02

(54) **Wisch-Wasch-Vorrichtung für Fahrzeuge**
Wash/wipe device for vehicles
Dispositif essuie-glace/lave-glace pour véhicules

(30) Priorität: 20.09.1995 DE 19534916
(43) Veröffentlichungstag der Anmeldung: 26.03.1997
(73) Patentinhaber: Ford Global Technologies, Inc., Dearborn, Michigan 48126-2490 (US)
(72) Erfinder: Urhahne, Joseph, Dipl.-Ing., 50769 Köln (DE)
(74) Vertreter: Bonsmann, Manfred, Dipl.-Ing.

(56) Entgegenhaltungen:
- EP-A- 0 350 783
- EP-A- 0 545 793
- DE-A- 3 512 941
- US-A- 5 200 676
- AUTOMOBILETECHNISCHE ZEITSCHRIFT, Bd. 92, Nr. 9, 1990, STUTTGART DE, Seiten 470-481, XP002033061 VONDRACEK, PAVEL ET AL: "Elektronik, Multiplextechnik und Diagnosefähigkeit des neuen BMW 850i"
- AUTOMOTIVE ENGINEER, Bd. 20, Nr. 2, 1995, BURY ST. EDMUNDS, GB, Seiten 14-15, XP000512558 EMBACHER, MARTIN: "CAN networking solution for vehicle body DC motor control"
- ELEKTRONIK, Bd. 41, Nr. 15, 1992, MÜNCHEN DE, Seiten 78-83, XP000310285 HERBERLE, KLAUS: "So schnell wie nötig, so langsam wie möglich"
- REVUE TECHNIQUE DE L'AUTOMOBILE, Bd. 46, Nr. 528, 1991, BOUL. BILLANCOURT FR, Seiten XLVIII-LVI, XP000231235 M.V.: "Quatre pour soixante ou le multiplexage"
- ELEKTRONIK, Bd. 43, Nr. 27, 1994, POING DE, Seiten 102-105, XP000491944 EMBACHER, MARTIN: "CAN-Chip macht Karosserieelektronik erschwinglich "

## Beschreibung

Die Erfindung betrifft eine Wisch-Wasch-Vorrichtung für Fahrzeuge mit wenigstens einem über einen Wischermotor antreibbaren Wischer und mit einer ein Wasserreservoir und einen Wasserpumpenmotor aufweisenden Wascheinrichtung, und mit einer die Aktivierung bewirkenden Schaltanordnung.

Bei derartigen, beispielsweise aus der US-PS 52 00 676 bekannten Vorrichtungen weist der Wischermotor drei Kohlebürsten auf, um zwei unterschiedliche Wischgeschwindigkeiten bereitzustellen. Der erforderliche Arbeitsstrom wird sowohl dem Wischermotor als auch dem Wasserpumpenmotor jeweils über mechanische Schaltkontakte zugeführt, deren Ansteuerung über eine dem Wischermotor und dem Wasserpumpenmotor gemeinsame Zentralelektronik erfolgt.

Die Auslegung eines Gleichstrommotors für zwei Geschwindigkeiten stellt hinsichtlich seiner optimalen Leistung einen Kompromiß dar, da der Gleichstrommotor bei keiner der beiden Geschwindigkeiten an seinem optimalen Arbeitspunkt arbeitet. Die Herstellungskosten eines für zwei Geschwindigkeiten ausgelegten Gleichstrommotors sind höher als die eines für eine Geschwindigkeit ausgelegten Gleichstrommotors. Die infolge der ständigen Abtragung der Kohlebürsten auftretende Verschmutzung des Kommutators ist einem Gleichstrommotor mit drei Kohlebürsten größer als bei einem Gleichstrommotor mit zwei Kohlebürsten.

Bei der Schaltung des Arbeitsstroms des Wischermotors über mechanische Schaltkontakte, wie Schalter, Relais und Schleifringe treten infolge der mechanischen Bewegung und der Lichtbogenbildung Alterungseffekte auf. Für die dem Wischermotor oder den Wischermotoren und dem Wasserpumpenmotor gemeinsam zugeordnete Zentralelektronik ist ein relativ hoher Verkabelungsaufwand erforderlich.

Aus der EP 0 545 793 A1 ist ein Verfahren bekannt, mit dem zwei Gleichstrommotoren, die zum Beispiel als Wischermotoren eingesetzt sein können, synchronisiert werden können. Zur Synchronisation wird auf der sich drehenden Welle der Motoren eine Markierung wie zum Beispiel ein Magnet angebracht, deren Position von einem ortsfesten Sensor bestimmt wird. Das Signal des Sensors kann dann von einer Steuerelektronik verwendet werden, um die synchrone Drehung zweier oder mehrerer Gleichstrommotoren sicherzustellen. Das Problem, die eingesetzten Gleichstrommotoren kostengünstiger und robuster auszugestalten, wird jedoch nicht angesprochen, und die am Gehäuse des Wischermotors angebrachte Elektronik betrifft ausschließlich die sensorische Erfassung des Rotationswinkels.

Des weiteren wird in dem Artikel "Elektronik, Multiplextechnik und Diagnosefähigkeit des neuen BMW 850i" (Automobiltechnische Zeitschrift, Bd. 92, Nr. 9, 1990, Seiten 470-481) allgemein angeregt, zur Leitungsreduzierung eine Integration von Elektronik, Aktuatorik und Sensorik in einer Baueinheit anzustreben. Das Problem, den Aufbau herkömmlicher Wischermotoren zu vereinfachen und robuster zu gestalten, wird jedoch nicht angesprochen.

Der Erfindung liegt zur Behebung der geschilderten Nachteile die Aufgabe zugrunde, Wisch-Wasch-Vorrichtungen der eingangs genannten Art mit niedrigeren Herstellungskosten und verbesserten Betriebsbedingungen für den Wischermotor zu schaffen. Weiterhin wird eine Verringerung der mechanisch bewegten Teile, insbesondere bei Schaltvorgängen, und außerdem eine Verringerung des Verkabelungsaufwandes für die Wisch-Wasch-Vorrichtung angestrebt.

Erfindungsgemäß ist vorgesehen, daß der Wischermotor als für nur eine Nenndrehzahl ausgelegter Gleichstrommotor mit Getriebe ausgebildet ist, und daß eine mit einer Steuer-, Treiber- und Leistungsstufe versehene Hybridelektronik direkt am oder im Gehäuse des Wischermotors angeordnet ist.

Hierbei ist vorteilhaft, daß die Herstellungskosten niedriger und die Betriebsbedingungen des Gleichstrommotors günstiger sind als bei einem für zwei Drehzahlen ausgebildeten Gleichstrommotor. Über die Leistungsstufe der Hybridelektronik wird der Arbeitsstrom des Wischermotors kontaktlos geschaltet, wobei gegenüber Kontaktschaltern kein Alterungseffekte auftreten. Die Hybridelektronik ermöglicht ein ruckfreies Starten des Wischers bzw. der Wischer des Fahrzeugs im Vergleich zur Schaltung des Arbeitsstroms über mechanische Kontakte. Die Zuordnung einer Hybridelelktronik zu dem Wischermotor reduziert den Verkabelungsaufwand für die Wisch-Wasch-Vorrichtung, wodurch auch der Kostenaufwand für den Zusammenbau einer Wisch-Wasch-Vorrichtung in einem Fahrzeug gegenüber herkömmlichen Vorrichtungen reduziert wird. Die Anordnung der Hybridelektronik direkt am oder im Metallgehäuse des Wischermotors hat den Vorteil, daß die bei Betrieb der Hybridelektronik entstehende Wärme auf das Gehäuse abgeleitet wird und daher kein gesondertes Kühlelement für die Hybridelektronik erforderlich ist.

Während erfindungsgemäß der Arbeitsstrom des Wischermotors bei Aktivierung der Schaltanordnung über die Leistungsstufe der Hybridelektronik geschaltet wird, kann in weiterer Ausgestaltung der Erfindung vorgesehen sein, daß dem Wasserpumpenmotor der Arbeitsstrom über die Schaltanordnung direkt zugeführt wird. Dies hat den Vorteil, daß der Wasserpumpenmotor bidirektional betrieben werden kann, ohne daß eine Leistungsstufen aufweisende Vollbrücke erforderlich wäre. In weiterer Ausgestaltung der Erfindung kann vorgesehen sein, daß in einer Schaltstellung "langsames Wischen" der Schaltanordnung das dem Wischermotor zugeleitete Ausgangssignal der Hybridelektronik derart ausgebildet ist, daß an dem Wischermotor über einen Wischzyklus die Nennspannung anliegt, und daß dann kurzzeitig keine Spannung anliegt, so daß der Wischer in einer Ruheposition verharrt bevor ein neuer Wischzyklus startet. Obwohl der als Wischermotor eingesetzte Gleichstrommotor nur für eine Nenndrehzahl ausgelegt ist, wird durch die zwischen zwei Wischzyklen vorgesehene Intervallzeit die zweite - gesetzlich geforderte - Wischstufe realisiert.

Alternativ kann vorgesehen sein, daß in einer Schaltstellung "langsames Wischen" der Schaltanordnung das dem Wischermotor zugeleitete Ausgangssignal der Hybridelektronik ein pulsweise moduliertes Spannungssignal ist, so daß in dieser Schaltstellung die Geschwindigkeit des Wischvorganges gegenüber der Nominalgeschwindigkeit bei Nenndrehzahl des Wischermotors reduziert ist.

Wenn das Fahrzeug mehrere Wischer mit jeweils gesondertem Wischermotor aufweist, kann in weiterer Ausbildung der Erfindung vorgesehen sein, daß jedem Wischermotor eine gesonderte Hybridelektronik zugeordnet ist. Hierbei ist vorteilhaft, daß die Leistungsstufen der Hybridelektroniken auf den Leistungsbedarf des jeweiligen Wischermotors individuell zugeschnitten sein können.

Gemäß einer weiteren Ausbildung der Erfindung ist vorgesehen, daß die Steuer- und Treiberstufen der jeweiligen Hybridelektronik für sowohl für eine Frontwischereinrichtung als auch eine Heckwischereinrichtung vorgesehene Wischermotoren identisch ausgebildet sind. Hierbei ist vorteilhaft, daß wenigstens die Steuer- und Treiberstufe der Hybridelektronik für den Frontwischermotor und den Heckwischermotor auf einem Chip angeordnet sein können und somit dieser Chip sowohl für den Frontwischermotor als auch für den Heckwischermotor einsetzbar ist. In weiterer Ausbildung der Erfindung kann vorgesehen sein, daß die Aktivierungseinrichtung der Schaltanordnung als widerstandscodierter Schalter für alle Funktionen der Wischvorrichtung(en) ausgebildet ist. Dies hat den Vorteil, daß eine Vielzahl unterschiedlicher Schaltstellungen über eine Schaltleitung erkennbar ist.

Weiterhin kann erfindungsgemäß vorgesehen sein, daß der Hybridelektronik von einem die Ruhestellung des Wischers anzeigenden, im Gehäuse des Wischermotors angeordneten Exzenterschalter stammende Eingangssignale zuführbar sind. Hierdurch kann die Ruhestellung des Wischers identifiziert werden. Gegenüber Wisch-Wasch-Vorrichtungen nach dem Stande der Technik ist dabei vorteilhaft, daß die bei den Getrieben der dort eingesetzten Gleichstrommotoren vorgesehenen drei Schleifringe entfallen können.

Alternativ kann hierzu in weiterer Ausbildung der Erfindung vorgesehen sein, daß zum Zwecke der Erkennung der Ruhestellung des Wischers ein Hall-Sensor vorgesehen ist. Der Hall-Sensor kann beispielsweise an der Motorwelle des Wischermotors angeordnet sein.

Die Steuerstufe der Hybridelektronik kann in weiterer Ausbildung der Erfindung für ein individuell programmierbares Intervallwischen ausgebildet sein.

Schließlich kann auch vorgesehen sein, daß der Hybridelektronik Eingangssignale von einem Regensensor zuführbar sind, wodurch ein vollständig automatisiertes Wischen ermöglicht wird.

Weitere Ausbildungen, Vorteile und Merkmale der Erfindung ergeben sich aus der nachfolgenden Beschreibung eines Ausführungsbeispiels anhand der beigefügten Zeichnungen. Es zeigen:
- Fig. 1: eine schematische Blockbilddarstellung einer Wisch-Wasch-Vorrichtung eines Fahrzeugs mit einer Frontwischereinrichtung, einer Heckwischereinrichtung, einem Wasserpumpenmotor und einer Schaltanordnung;
- Fig. 2: ein schematisches Schaltbild des Frontwischermotors, des Heckwischermotors und des Wasserpumpenmotors mit einer auf die Funktionen der vorstehenden Elemente aufgeteilten Darstellung der Schaltanordnung;
- Fig. 3: eine Darstellung des Innenschaltbildes der Schaltanordnung.

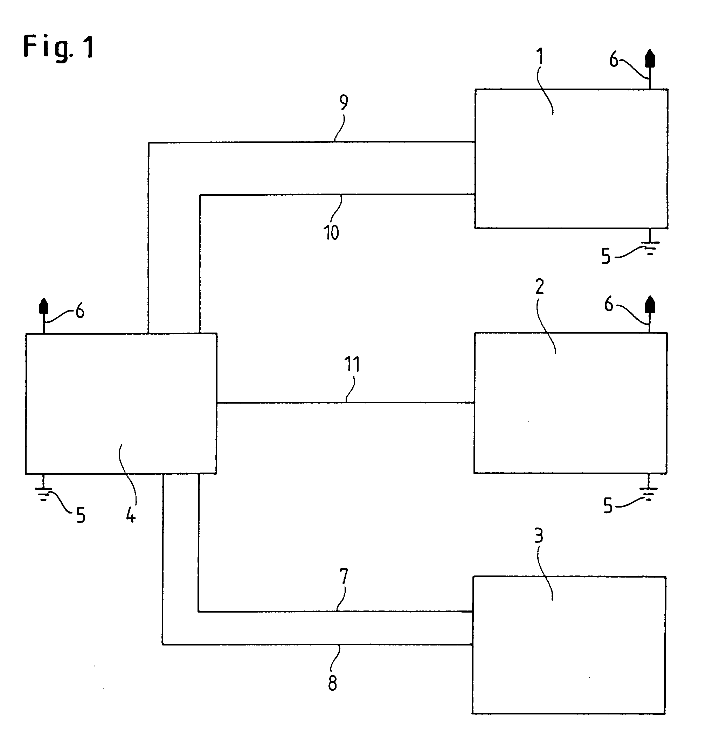

Ein (nicht dargestelltes) Fahrzeug weist eine Wisch-Wasch-Vorrichtung mit einem (nicht dargestellten) Frontwischer und einem (nicht dargestellten) Heckwischer auf. Dem Frontwischer ist ein mit 1 bezeichneter Frontwischermotor zugeordnet, und dem Heckwischer ist ein mit 2 bezeichneter Heckwischermotor zugeordnet. Weiterhin ist eine (nicht dargestellte) Wascheinrichtung mit einem (nicht dargestellten) Wasserreservoir und einem mit 3 bezeichneten Wasserpumpenmotor vorgesehen, welche sowohl dem Frontwischer als auch dem Heckwischer zugeordnet ist. Der Wasserpumpenmotor 3 kann - wie nachstehend näher erläutert werden wird - bidirektional betrieben werden. Die Aktivierung der Wisch-Wasch-Vorrichtung erfolgt über eine mit 4 bezeichnete Schaltanordnung, die üblicherweise im Fahrgastraum des Fahrzeuges angeordnet ist, beispielsweise an oder in Nähe der Lenksäule des Fahrzeugs. Aus Fig. 1 ist weiterhin ersichtlich, daß beide Wischermotoren 1 und 2 und die Schaltanordnung 4 elektrisch sowohl an Masse 5 als auch an einer Spannungsversorgung 6 anliegen, während der Wasserpumpenmotor 3 elektrisch über Leitungen 7 und 8 mit der Schaltanordnung 4 verbunden ist und über diese elektrisch versorgt wird. Von der Schaltanordnung 4 führen Leitungen 9 und 10 zu dem Frontwischermotor 1, wobei über die Leitung 9 angegeben wird, welche von mehreren Schalterstellungen eingestellt ist, beispielsweise "langsames Wischen", "schnelles Wischen", "Intervallwischen" oder "Stellung aus". Entsprechendes gilt für eine zu dem Wischermotor 2 führende Leitung 11. Die Leitung 10 dient zur Übertragung von Signalen für eine variable Intervallschaltung.

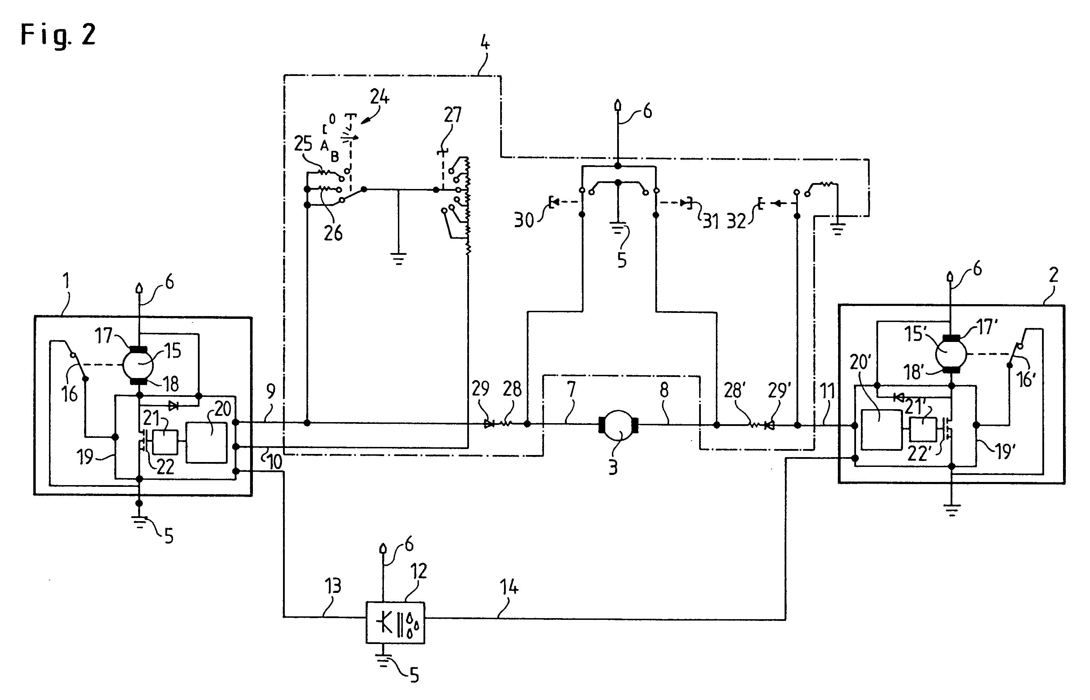

In Fig. 2 ist zusätzlich zu den in Fig. 1 dargestellten Elementen ein insgesamt mit 12 bezeichneter Regensensor dargestellt, welcher über Leitungen 13 und 14 mit den Wischermotoren 1 und 2 in Verbindung steht.

Der für die Frontwischereinrichtung vorgesehene Wischermotor 1 weist einen für nur eine Nenndrehzahl ausgelegten Gleichstrommotor 15 auf, dem ein (nicht dargestelltes) Getriebe nachgeschaltet ist. Mit 16 ist ein Exzenterschalter bezeichnet, der ortsfest an einem Gehäuse des Getriebes angeordnet ist und über ein auf der Getriebewelle angebrachtes Exzenter (nicht dargestellt) betätigbar ist. Der für nur eine Nenndrehzahl ausgelegte Gleichstrommotor 15 weist lediglich zwei Bürsten 17 und 18 auf. Der Gleichstrommotor 15 und das (nicht dargestellte) Getriebe weisen ein gemeinsames, (nicht dargestelltes) Gehäuse auf. Direkt an diesem Gehäuse ist eine insgesamt mit 19 bezeichnete Hybridelektronik angeordnet, welche eine Steuerstufe 20, eine Treiberstufe 21 und eine Leistungsstufe 22 aufweist. Bei dem dargestellten Ausführungsbeispiel weist die Hybridelektronik 19 außerdem eine Freilaufdiode 23 auf, die antiparallel zu dem Gleichstrommotor 15 geschaltet ist und als Schutzdiode für diesen dient.

Wie aus der Zeichnung ersichtlich, erfolgt die Schaltung des Arbeitsstroms des Gleichstrommotors 15 über die Leistungsstufe 22. Der Arbeitsstrom wird somit kontaktlos geschaltet.

Die dem Heckwischermotor 2 zugeordneten Elemente sind den dem Frontwischermotor 1 zugeordneten Elementen entsprechend ausgebildet und tragen jeweils gleiche Bezugsziffern, welche durch "'" ergänzt sind. Diese Elemente werden nicht nochmals gesondert beschrieben.

Die Schaltanordnung 4 ist als widerstandscodierter Schalter für alle Funktionen der Wischvorrichtungen ausgebildet. Ein schematisch mit 24 bezeichneter Frontwischerschalter kann in Positionen Aus (0), I (Interwallwischen) A (für langsames Wischen und B (Wischen mit Nominalgeschwindigkeit) geschaltet werden. Zusätzlich ist eine nicht rastbare Schalterstellung T vorgesehen, die elektrisch der Schalterstellung A entspricht. Den Schaltstellungen I und A sind unterschiedliche Widerstände 25 und 26 zugeordnet. Infolge der unterschiedlichen Widerstände können dem Wischermotor 1 unterschiedliche Signale über die eine Leitung 9 zugeführt werden.

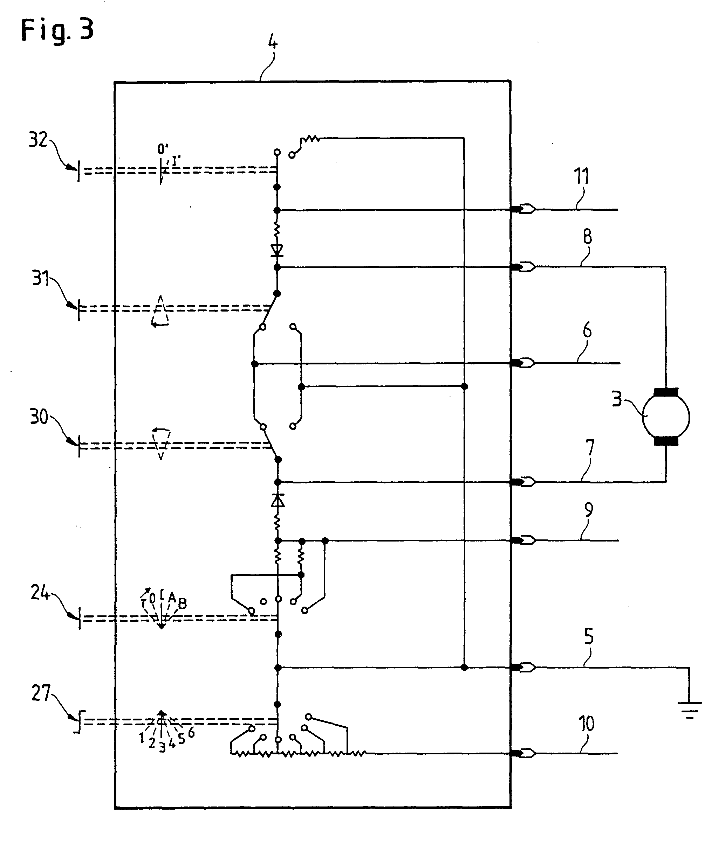

In Fig. 3 ist außerdem schematisch eine weiterhin mögliche Variante dargestellt. Diese Variante weist einen Schalter 27 für Intervallwischen auf, welcher eine Vielzahl von Schaltstellungen ermöglicht. Auch hier sind eine Anzahl von Widerständen vorgesehen, so daß über die Leitung 10 unterschiedliche Schaltsignale geleitet werden können. Die unterschiedlichen Schalterstellungen, die über das Kabel 10 ausgelesen werden können, dienen zur variablen Zeitintervalleinstellung für den Intervallmodus.

In der Leitung 9 sind ein Widerstand 28 und eine Entkopplungsdiode 29 vorgesehen. In der Leitung 11 sind ein entsprechender Widerstand 28' und eine entsprechende Entkopplungsdiode 29' vorgesehen. Die Widerstände 28 bzw. 28' dienen zur Detektierung des Signals "Waschen" (Frontwaschen bzw. Heckwaschen). Die Ansteuerung des Wasserpumpenmotors 3 erfolgt über Schalter 31 und 30. Bei Betätigung beispielsweise des Schalters 30 läuft der Motor in der Richtung, in der die Pumpe Wasser auf die Frontscheibe befördert, und zwar dadurch, daß die Leitung 7 auf Massepotential gelegt wird, während die Leitung 8 über den geschlossenen Schalter 31 an Spannung anliegt. Die Schalter 30 und 31 sind über die Leitungen 9 bzw. 11 mit der Hybridelektronik 19 bzw. 19' verbunden. Über die infolge der Widerstände 28 bzw. 28' bewirkte Widerstandscodierung identifiziert die jeweilige Hybridelektronik eine Betätigung des Schalters 30 bzw. 31 und damit die Anforderung des Wischvorganges zusätzlich zu dem Waschvorgang, wodurch der jeweilige Wischermotor 1 bzw. 2 betätigt wird. Ein Heckwischerschalter ist mit 32 bezeichnet. Auch dieser Schalter ist als widerstandscodierter Schalter ausgebildet, und zwar mit einem Widerstand 26', welcher in seinem Wert dem Wert des Widerstandes 26 entspricht und somit als Codierung für die Funktion Intervallwischen dient.

## Patentansprüche

1. Wisch-Wasch-Vorrichtung für Fahrzeuge mit wenigstens einem über einen Wischermotor antreibbaren Wischer und mit einer ein Wasserreservoir und einen Wasserpumpenmotor aufweisenden Wascheinrichtung, und mit einer die Aktivierung bewirkenden Schaltanordnung, dadurch gekennzeichnet, daß der Wischermotor (1, 2) als für nur eine Nenndrehzahl ausgelegter Gleichstrommotor (15, 15') mit Getriebe ausgebildet ist, und daß eine mit einer Steuer-, Treiber- und Leistungsstufe (20, 20' bzw. 21, 21' bzw. 22, 22') versehene Hybridelektronik (19, 19') direkt am oder im Gehäuse des Wischermotors angeordnet ist.

2. Wisch-Wasch-Vorrichtung nach Anspruch 1, dadurch gekennzeichnet, daß der Arbeitsstrom des Wischermotors (15, 15') bei Aktivierung der Schaltanordnung (4) über die Leistungsstufe (22, 22') der Hybridelektronik (19, 19') geschaltet wird, und daß dem Wasserpumpenmotor (3) der Arbeitsstrom über die Schaltanordnung (4) direkt zugeführt wird.

3. Wisch-Wasch-Vorrichtung nach Anspruch 2, dadurch gekennzeichnet, daß in einer Schaltstellung "langsames Wischen" (A) der Schaltanordnung (4) das dem Gleichstrommotor (15, 15') zugeleitete Ausgangssignal der Hybridelektronik (19, 19') derart ausgebildet ist, daß an dem Gleichstrommotor über einen Wischzyklus die Nennspannung anliegt, und daß dann kurzzeitig keine Spannung anliegt, so daß der Wischer in einer Ruheposition verharrt, bevor ein neuer Wischzyklus startet.

4. Wisch-Wasch-Vorrichtung nach Anspruch 2, dadurch gekennzeichnet, daß in einer Schaltstellung "langsames Wischen" (A) der Schaltanordnung (4) das dem Gleichstrommotor (15, 15') zugeleitete Ausgangssignal der Hybridelektronik (19, 19') ein pulsweise moduliertes Spannungssignal ist, so daß die Geschwindigkeit des Wischvorganges gegenüber der Nominalgeschwindigkeit bei Nenndrehzahl des Gleichstrommotors (15, 15') reduziert ist.

5. Wisch-Wasch-Vorrichtung nach einem der Ansprüche 1 bis 4, dadurch gekennzeichnet, daß mehrere Wischer mit jeweils gesondertem Gleichstrommotor (15, 15') mit zugeordneter Hybridelektronik (19, 19') vorgesehen sind.

6. Wisch-Wasch-Vorrichtung nach Anspruch 5, dadurch gekennzeichnet, daß die Steuer- und Treiberstufen (20, 20', 21, 21') der Hybridelektronik (19, 19') für sowohl für eine Frontwischereinrichtung als auch für eine Heckwischereinrichtung vorgesehene gesonderte Wischermotoren (1, 2) jeweils identisch ausgebildet sind.

7. Wisch-Wasch-Vorrichtung nach einem der Ansprüche 1 bis 6, dadurch gekennzeichnet, daß die Aktivierungseinrichtung der Schaltanordnung (4) als widerstandscodierter Schalter für alle Funktionen (27, 24, 32) ausgebildet ist.

8. Wisch-Wasch-Vorrichtung nach einem der Ansprüche 1 bis 7, dadurch gekennzeichnet, daß der Hybridelektronik (19, 19') von einem die Ruhestellung des Wischers anzeigenden, im Gehäuse des Wischermotors (1, 2) angeordneten Exzenterschalter (16, 16') stammende Eingangssignale zuführbar sind.

9. Wisch-Wasch-Vorrichtung nach einem der Ansprüche 1 bis 7, dadurch gekennzeichnet, daß zum Zwecke der Erkennung der Ruhestellung des Wischers ein Hall-Sensor vorgesehen ist.

10. Wisch-Wasch-Vorrichtung nach einem der Ansprüche 1 bis 9, dadurch gekennzeichnet, daß die Steuerstufe (20, 20') der Hybridelektronik (19, 19') für ein individuell programmierbares Intervallwischen ausgebildet ist.

11. Wisch-Wasch-Vorrichtung nach einem der Ansprüche 1 bis 10, dadurch gekennzeichnet, daß der Hybridelektronik (19, 19') Eingangssignale von einem Regensensor (12) zuführbar sind.

## Claims

1. Windscreen washer installation for vehicles with at least one wiper which can be driven by a wiper motor and with a washing installation having a water reservoir and a water pump motor, and with a contact arrangement effecting the activation, characterised in that the wiper motor (1, 2) is formed as a direct current motor (15, 15') with transmission laid out for only one nominal number of revolutions, and in that hybrid electronics (19, 19') provided with a control, drive and output stage (20, 20' / 21, 21' / 22, 22') is positioned directly on or in the housing of the wiper motor.

2. Windscreen washer installation according to Claim 1 characterised in that the working current of the wiper motor (15, 15') is switched upon activation of the contact arrangement (4) via the output stage (22, 22') of the hybrid electronics (19, 19'), and in that the working current is directly fed to the water pump motor (3) via the contact arrangement (4).

3. Windscreen washer installation according to claim 2 characterised in that in a switching position "slow wipe" (A) of the contact arrangement (4) the output signal of the hybrid electronics (19, 19') fed to the direct current motor (15, 15') is formed in such a way that the nominal voltage lies on the direct current motor via a wiper cycle and that then for a short time no voltage lies thereupon, in such a way that the wiper remains in a position of rest before a new cycle starts.

4. Windscreen washer installation according to Claim 2 characterised in that in a switching position "slow wipe" (A) of the contact arrangement (4) the output signal of the hybrid electronics (19, 19') fed to the direct current motor (15, 15') is a voltage signal with pulse modulation, in such a way that the speed of the wiping process is reduced in relation to the nominal speed with a nominal number of revolutions of the direct current motor (15, 15').

5. Windscreen washer installation according to one of the Claims 1 to 4 characterised in that several wipers are provided wick respective separate direct current motor (15, 15') with assigned hybrid electronics (19, 19').

6. Windscreen washer installation according to Claim 5 characterised in that the control and drive stages (20, 20', 21, 21') of the hybrid electronics (19, 19') are respectively identically formed for both wiper motors (1, 2) for a front wiper installation and a rear wiper installation.

7. Windscreen washer installation according to one of the Claims 1 to 6 characterised in that the activation installation of the contact arrangement (4) is formed as a resistance-coded switch for all functions (27, 24, 32).

8. Windscreen washer installation according to one of the Claims 1 to 7 characterised in that input signals can be fed to the hybrid electronics (19, 19') from an eccentric switch (16, 16') indicating the position of rest of the wiper and positioned in the housing of the wiper motor (1, 2).

9. Windscreen washer installation according to one of the Claims 1 to 7 characterised in that for the purpose of recognition of the position of rest of the wiper a hall sensor is provided.

10. Windscreen washer installation according to one of the Claims 1 to 9 characterised in that the control stage (20, 20') of the hybrid electronics (19, 19') is formed for an individually programmable interval wipe.

11. Windscreen washer installation according to one of the Claims 1 to 10 characterised in that input signals from a rain sensor (12) can be sent to the hybrid electronics (19, 19').

## Revendications

1. Dispositif essuie-glace/lave-glace pour véhicules comprenant au moins un essuie-glace pouvant être actionné par un moteur d'essuie-glace, et un lave-glace présentant un réservoir d'eau et un moteur de pompe à eau, comprenant également un dispositif de commande provoquant l'activation, caractérisé en ce que le moteur de l'essuie-glace (1, 2) est réalisé en tant que moteur à courant continu (15, 15') conçu pour un seul régime nominal, avec une transmission, et en ce qu'un dispositif électronique hybride (19, 19') muni d'un maître-oscillateur, d'un étage d'attaque et d'un étage de puissance (respectivement 20, 20' ; 21, 21' et 22, 22') est placé directement sur ou dans le carter du moteur d'essuie-glace.

2. Dispositif essuie-glace/lave-glace selon la revendication 1, caractérisé en ce que le courant de travail du moteur d'essuie-glace (15, 15') est fourni en activant le dispositif de commande (4) par le biais de l'étage de puissance (22, 22') du dispositif électronique hybride (19, 19'), et en ce que le courant de travail est amené directement au moteur de la pompe à eau (3) par l'intermédiaire du dispositif de commande (4).

3. Dispositif essuie-glace/lave-glace selon la revendication 2, caractérisé en ce que, lorsque le dispositif de commande (4) est sur une position de commande "vitesse lente" (A), le signal de sortie fourni par le dispositif électronique hybride (19, 19') au moteur à courant continu (15, 15') est tel que le moteur à courant continu reçoit pendant un cycle de balayage la tension nominale, puis ne reçoit brièvement plus aucune tension afin que l'essuie-glace reste dans une position de repos, avant qu'un nouveau cycle de balayage ne débute.

4. Dispositif essuie-glace/lave-glace selon la revendication 2, caractérisé en ce que, lorsque le dispositif de commande (4) est sur une position de commande "vitesse lente" (A), le signal de sortie fourni par le dispositif électronique hybride (19, 19') au moteur à courant continu (15, 15') est un signal de tension modulé par impulsions, si bien que la vitesse de balayage est réduite par rapport à la vitesse nominale lorsque le moteur à courant continu (15, 15') tourne à un régime nominal

5. Dispositif essuie-glace/lave-glace selon l'une des revendications 1 à 4, caractérisé en ce que sont prévus plusieurs essuie-glace comportant chacun un moteur à courant continu séparé (15, 15') auquel est associé un dispositif électronique hybride (19, 19').

6. Dispositif essuie-glace/lave-glace selon la revendication 5, caractérisé en ce que le maître-oscillateur et l'étage d'attaque (20, 20', 21, 21') du dispositif électronique hybride (19, 19') sont réalisés de façon identique, qu'ils soient destinés à un moteur d'essuie-glace (1, 2) prévu pour un dispositif d'essuie-glace avant ou à un moteur d'essuie-glace (1, 2) prévu pour un dispositif d'essuie-glace arrière.

7. Dispositif essuie-glace/lave-glace selon l'une des revendications 1 à 6 caractérisé en ce que le dispositif d'activation du dispositif de commande (4) est réalisé en tant que commutateur à résistance codée pour toutes les fonctions (27, 24, 32).

8. Dispositif essuie-glace/lave-glace selon l'une des revendications 1 à 7, caractérisé en ce que des signaux d'entrée émanant d'un interrupteur à excentrique (16, 16') placé dans le boîtier du moteur d'essuie-glace (1, 2) et indiquant la position de repos de l'essuie-glace peuvent être amenés au dispositif électronique hybride (19, 19').

9. Dispositif essuie-glace/lave-glace selon l'une des revendications 1 à 7, caractérisé en ce qu'un capteur de Hall est prévu pour reconnaître la position de repos de l'essuie-glace.

10. Dispositif essuie-glace/lave-glace selon l'une des revendications 1 à 9, caractérisé en ce que le maître-oscillateur (20, 20') du dispositif électronique hybride (19, 19') est conçu pour un balayage intermittent programmable au cas par cas.

11. Dispositif essuie-glace/lave-glace selon l'une des revendications 1 à 10, caractérisé en ce que des signaux d'entrée émanant d'un détecteur de pluie peuvent être amenés au dispositif électronique hybride (19, 19').
